# EUROPÄISCHE PATENTSCHRIFT

(11) **EP 1 678 439 B1**
(45) Veröffentlichungstag und Bekanntmachung des Hinweises auf die Patenterteilung: **12.09.2007**
(21) Anmeldenummer: 05773024.4
(22) Anmeldetag: 19.07.2005
(51) Int. Cl.: F16L 37/084

(54) **ROHRMUFFE**
CONNECTING SLEEVE
MANCHON TUBULAIRE

(30) Priorität: 10.08.2004 DE 102004038811
(43) Veröffentlichungstag der Anmeldung: 12.07.2006
(73) Patentinhaber: Poloplast GmbH & Co. KG, 4060 Leonding (AT)
(72) Erfinder: PAIER, Thomas, A-3352 St. Peter in der Au (AT)
(74) Vertreter: Weber, Joachim
(86) Internationale Anmeldenummer: PCT/EP2005/007875
(87) Internationale Veröffentlichungsnummer: WO 2006/018092

(56) Entgegenhaltungen:
- WO-A-01/51841
- FR-A- 2 724 708
- US-A- 4 097 076

## Beschreibung

Die Erfindung bezieht sich auf eine Rohrmuffe nach dem Oberbegriff des Hauptanspruchs.

Im Einzelnen bezieht sich die Erfindung auf eine Rohrmuffe mit einem passend auf ein Rohr aufschiebbaren, mit nach innen weisenden Dichtmitteln versehenen Grundkörper.

Rohrmuffen sind in unterschiedlichster Ausgestaltung aus dem Stand der Technik bekannt. Sie werden insbesondere verwendet, um Rohre zur Montage zusammenzustecken.

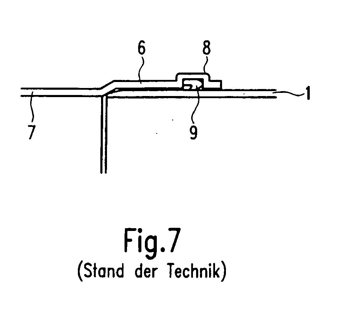

Eine Rohrmuffe nach dem Stand der Technik ist in Fig. 7 in einer Teil-Schnittansicht in schematischer Darstellung gezeigt.

Die Rohrmuffe umfasst einen Grundkörper 6, welcher einstückig mit einem Rohr 7 verbunden ist. Der Grundkörper 6 weist einen Innendurchmesser auf, welcher geringfügig größer ist, als der-Außendurchmesser eines mit der Rohrmuffe zu verbindenden Rohres 1, sodass dieses in den Grundkörper 6 eingeschoben werden kann, so wie dies in Fig. 7 gezeigt ist.

Der Grundkörper 6 der aus dem Stand der Technik bekannten Rohrmuffe ist mit einer ringförmigen, nach außen weisenden Sicke 8 versehen, in welche ein Dichtring 9 eingelegt ist. Der Dichtring 9 kann mit einer oder mehreren Dichtlippen versehen sein. Es ist auch möglich, mehrere Dichtringe hintereinander einzubauen.

Wie in Fig. 7 gezeigt, erfolgt beim Einschieben des Rohrs 1 in den Grundkörper 6 eine Verpressung oder Verformung des Dichtrings 9, wodurch dessen Dichtlippe verformt und vorgespannt wird.

Die aufgebrachte Vorspannung beträgt üblicherweise 10 bis 15 % (geometrisch).

Beim Auftreten eines Innendrucks in dem Rohr 1 führt dies zu einer Aufstellung und Erhöhung des Dichtrings 9 bzw. dessen Dichtlippe. Die Abdichtung erfolgt somit von der Innenseite des Rohrs 1 aus. Dabei erweist es sich als nachteilig, dass eine Abdichtung bei Unterdrücken in dem Rohr 1 nicht oder nur geringfügig möglich ist. Bei einem Unterdruck wird das von außen anstehende Medium entweder über den Dichtring 9 gesogen oder am Rücken des Dichtrings 9 vorbeigeführt.

Ein weiterer Nachteil der aus dem Stand der Technik bekannten Rohrmuffe besteht darin, dass der Platzbedarf für die Sicke 8 und den Dichtring 9 von den zu überbrückenden Toleranzen und von der Rohrwandstärke weitgehend vorgegeben ist. Der Platzbedarf wird insbesondere bei kleinen Durchmessern relativ zu dem Rohr sehr groß.

Ein weiterer Nachteil besteht in der Art der Montage der Rohrmuffe selbst. Hierbei ist es erforderlich, den Dichtring 9 präzise und richtig einzusetzen. Auch bei der Montage des Rohrs 1 relativ zu dem Grundkörper kann eine Verschiebung, Verkippung oder Entfernung des Dichtrings 9 auftreten, wodurch eine zuverlässige Abdichtung nicht oder nur bedingt erfolgen kann. Ein derartiger Zustand ist insbesondere von außen im montierten Zustand nicht nachkontrollierbar.

Der Erfindung liegt die Aufgabe zugrunde, eine Rohrmuffe der eingangs genannten Art zu schaffen, welche bei einfachem Aufbau und einfacher, kostengünstiger Herstellbarkeit eine hohe Dichtwirkung aufweist und betriebssicher anwendbar ist.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass der Grundkörper einen elastischen, ringartigen Bereich umfasst, welcher einstückig mit dem Grundkörper ausgebildet ist und mit den Dichtmitteln versehen ist.

Die erfindungsgemäße Rohrmuffe zeichnet sich durch eine Reihe erheblicher Vorteile aus.

Erfindungsgemäß ist somit keinerlei Sicke oder stützende Außenwandung vorgesehen, vielmehr ist der elastische, ringartige Bereich direkt und einstückig mit dem Grundkörper ausgebildet. Somit entfallen erfindungsgemäß sämtliche Montagearbeiten, da der ringförmige, elastische Bereich bereits an dem Grundkörper ausgebildet ist. Demgemäß wird auch zuverlässig ausgeschlossen, dass bei der Montage der Rohrmuffe an einem Rohr die Dichtmittel beschädigt oder aus ihrer gewünschten Lage entfernt werden.

Ein weiterer, wesentlicher Vorteil der erfindungsgemäßen Rohrmuffe besteht darin, dass diese einen nur sehr geringen Platzbedarf erfordert, sodass die Rohrmuffe insbesondere auch bei beengten Einbauverhältnissen und/oder bei kleinen Rohrdurchmessern vorteilhaft anwendbar ist.

Weiterhin erweist es sich als vorteilhaft, dass die ordnungsgemäße Montage des Rohres innerhalb der Rohrmuffe durch die Ausbauchung und Verformung des elastischen, ringartigen Bereichs nach außen optisch feststellbar ist. Hierdurch erhöht sich die Betriebssicherheit ganz erheblich, da der korrekte Zusammenbau leicht nachkontrollierbar ist.

Erfindungsgemäß wird durch die erforderliche Vorspannung und durch die Auswahl des Innendurchmessers des elastischen, ringartigen Bereichs eine entsprechende Vorspannung und Grunddichtheit vorgegeben. Durch die Elastizität des ringartigen Bereiches erfolgt weiterhin eine zuverlässige Abdichtung sowohl bei einem positiven Innendruck als auch bei einem Unterdruck in dem Rohrsystem. Bei einem Innendruck erfolgt eine geringfügige Auswölbung des elastischen, ringartigen Bereichs sowie ein verstärktes Anlegen der Dichtlippe, welche dazu führen, dass die an diesem vorgesehenen Dichtmittel verstärkt wirksam werden können. Bei einem Unterdruck in dem Rohrsystem erfolgt ein verstärktes Anpressen der Dichtmittel durch eine Kontraktion des elastischen, ringartigen Bereichs auf dem eingeschobenen Rohr. Diese Wirkung wird durch den anstehenden Außendruck (Umgebungsdruck) verstärkt.

Erfindungsgemäß liegt somit der erfindungsgemäße Grundgedanke zugrunde, den elastischen, ringartigen Bereich nach außen hin offen zu gestalten, sodass sich dieser nicht gegen ein starres Material abstützt. Erfindungsgemäß wird somit auf eine starre Außenwand oder einen starren Außenmantel verzichtet.

Besonders vorteilhaft ist es, wenn der elastische, ringartige Bereich an zumindest einem seiner gegenüberliegenden, stirnseitigen Endbereiche mit einem im Wesentlichen nicht-elastischen Grundkörperring verbunden ist. Hierdurch ergibt sich ein hohes Maß an Steifigkeit der Gesamtkonstruktion und ein Abstützen und Halten des elastischen, ringartigen Bereichs. Es versteht sich, dass der elastische, ringartige Bereich auch beidseitig von jeweils einem nicht-elastischen Grundkörperring begrenzt sein kann. Die im Rahmen der Erfindung gewählten Begriffe "elastisch" und "nicht-elastisch" beziehen sich auf die auftretende Elastizität und elastische Verformung bei der Verwendung der Rohrmuffe, nicht jedoch auf die Tatsache, dass ein nicht-elastischer Grundkörperring keinerlei Elastizität im Sinne der klassischen Mechanik aufweisen dürfte.

Zur Minimierung des Raumbedarfs ist es günstig, wenn die Grundkörperringe im Wesentlichen fluchtend zu dem elastischen, ringartigen Bereich angeordnet sind. Der elastische, ringartige Bereich kann mit den Grundkörperringen entweder einstückig hergestellt oder mittels eines Fügeverfahrens (Schweißen oder Kleben) verbunden werden. Bei einem einstückigen Herstellungsverfahren können als Werkstoffe alle Kunststoffe verwendet werden, welche in einem ZweiKomponenten-Verfahren verarbeitet werden können, wobei eine Komponente Elastomer-Eigenschaften oder zumindest elastomerähnliche Eigenschaften aufweist. Bevorzugte Kunststoffe sind Polyolefine wie PP, PE etc. in Kombination mit TPE's, da diese leicht in 2-Komponenten-Spritzguß verarbeitbar sind.

Erfindungsgemäß ist es möglich, zur Schwingungsdämpfung und/oder Abkopplung die. Innenbereiche der Grundkörperringe mit einer Weichkomponente auszukleiden.

In einer Weiterentwicklung der Erfindung ist es auch möglich, in einer Abfolge mehrere elastische ringartige Bereiche und mehrere Grundkörperringe vorzusehen. Hierdurch ergibt sich eine Elastizität der erfindungsgemäßen Rohrmuffe, welche in gewissem Maße auch eine Abwinkelbarkeit ermöglicht.

Die Montage der erfindungsgemäßen Rohrmuffe kann durch eine große Innenfase an der Stirnseite der Rohrmuffe verbessert werden.

Die Verbindung zwischen dem elastischen, ringartigen Bereich und den benachbarten Grundkörperringen kann entweder über eine ebene Fläche erfolgen oder mittels einer Anschrägung oder Stufung oder allgemein durch eine zusätzliche formschlüssige Verbindung (Hinterschnitt) erfolgen. Zur besseren Verbindung können die Stirnflächen dem Herstellungsverfahren entsprechend optimierte Geometrien aufweisen. Hierdurch kann die Haftung verbessert werden, wodurch sich eine Verbesserung der Dichtwirkung ergibt.

Zur Verbesserung der optischen Kontrolle der Montage ist es möglich, den elastischen, ringartigen Bereich aus einem Material mit einer anderen Farbe herzustellen, als die Grundkörperringe. Es ist auch möglich, den elastischen, ringartigen Bereich aus einem transparenten oder transluzenten Material zu fertigen.

Um eine zusätzliche Abstützung und eine Erhöhung der Anpressung zu bewirken, kann es günstig sein, nach der Montage von außen eine Hülse aufzubringen, die zudem zu einer Zugsicherung und/oder einer Verdrehsicherung beiträgt. Als Alternative zu einer Hülse können auch Stützringe, Schutzringe, Stege oder sonstige Elemente am Umfang vorgesehen sein.

Im Folgenden wird die Erfindung anhand eines Ausführungsbeispiels in Verbindung mit der Zeichnung beschrieben. Dabei zeigt:
- Fig. 1: eine vereinfachte Längs-Schnittansicht der erfindungsgemäßen Rohrmuffe im nicht-montierten Zustand,
- Fig. 2: eine vergrößerte Darstellung der Einzelheit B gemäß Fig. 1,
- Fig. 3: eine vergrößerte Darstellung, analog der Einzelheit B von Fig. 2 im montierten Zustand,
- Fig. 4: eine stirnseitige Ansicht der erfindungsgemäßen Rohrmuffe mit Blickrichtung von rechts nach links gemäß Fig. 1,
- Fig. 5: eine Längs-Teilansicht eines weiteren Ausführungsbeispiels der erfindungsgemäßen Rohrmuffe,
- Fig. 6: eine stirnseitige Ansicht mit Darstellung der Schnittebenen der Fig. 5, und
- Fig. 7: eine Darstellung einer Rohrmuffe gemäß dem Stand der Technik, ebenfalls in Teil-Längs-Schnittansicht.

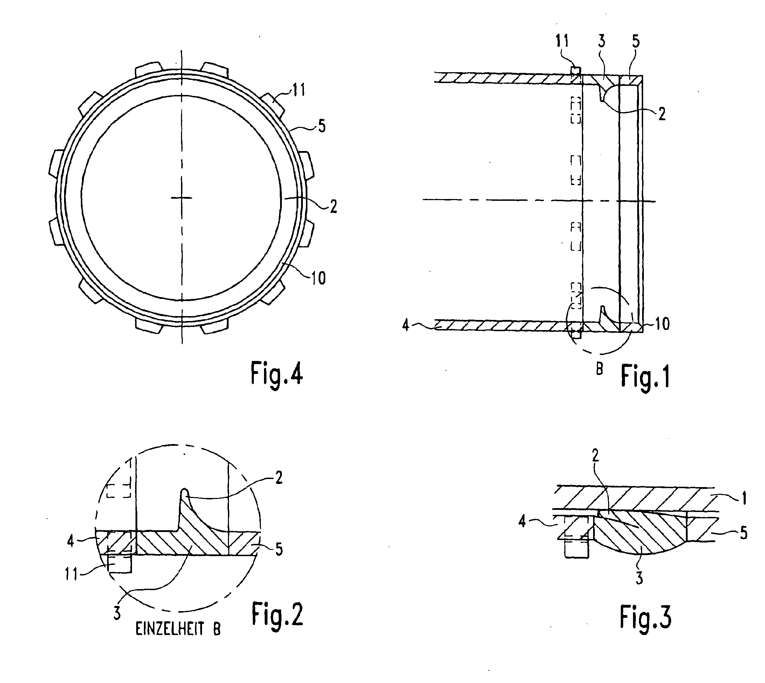

Die erfindungsgemäße Rohrmuffe umfasst einen elastischen, ringartigen Bereich 3, an dessen Innenseite eine elastisch verformbare Dichtlippe 2 (Dichtmittel) einstückig ausgebildet ist. Zur Verdeutlichung der Darstellung ist die Dichtlippe in Fig. 1 lediglich in der Schnittansicht gezeigt.

Der elastische, ringartige Bereich 3 ist an seinen beiden stirnseitigen Endbereichen jeweils mit einem Grundkörperring 4 und 5 verbunden. Die Grundkörperringe 4 und 5 sind im Wesentlichen nicht-elastisch ausgebildet. Die Verbindung der Grundkörperringe 4 und 5 mit dem elastischen, ringartigen Bereich 3 kann durch Anspritzen, durch Fügen oder durch ein sonstiges geeignetes Verfahren erfolgen.

Zur Erleichterung der Montage ist an dem freien Ende des Grundkörperrings 5 eine Fase 10 ausgebildet (siehe Fig. 1).

Die Fig. 2 und 3 zeigen den elastischen, ringartigen Bereich im Ursprungszustand (Fig. 2) sowie im montierten Zustand eines Rohres 1 (Fig. 3). Dabei ist ersichtlich, dass durch das Einschieben des Rohres 1 sowohl eine Ausbauchung der Außenfläche des elastischen, ringartigen Bereichs 3 erfolgt, als auch eine Verformung und Vorspannung der Dichtlippe 2.

Die Fig. 1 und 2 zeigen weiterhin am Umfang des Grundkörperrings 4 angeordnete Ansätze 11, welche zur Befestigung eines Verschlussrings oder Stützrings dienen können.

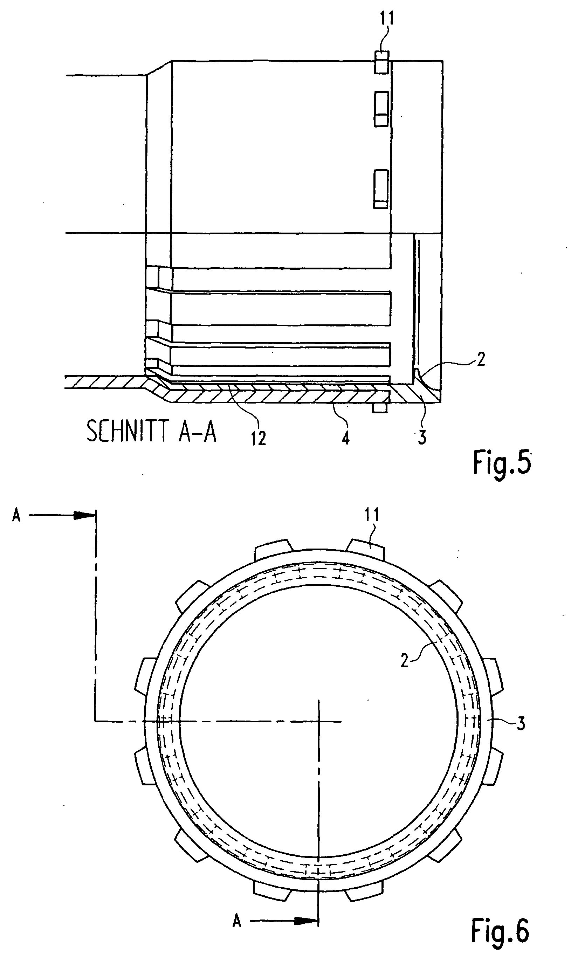

Bei dem in den Fig. 5 und 6 gezeigten Ausführungsbeispiel ist der elastische, ringartige Bereich 3, welcher die Dichtlippe 2 aufweist, nur an einer Seite mit einem Grundkörperring 4 verbunden. Der Grundkörperring 4 weist einen vergrößerten Innendurchmesser auf, um die Möglichkeit zu schaffen, am Umfang verteilte, einstückig mit dem elastischen, ringartigen Bereich 3 verbundene Axialrippen 12 vorzusehen. Diese Axialrippen 12 liegen im montierten Zustand gegen ein nicht dargestelltes Rohr an. Da die Axialrippen 12, wie auch der elastische, ringartige Bereich 3, aus einem weicheren Kunststoff gefertigt sind, ergibt sich hierdurch eine hervorragende Schallentkopplung zwischen der Rohrmuffe und einem Rohr.

Bei dem in den Fig. 5 und 6 gezeigten Ausführungsbeispiel ist der elastische, ringartige Bereich 3 ebenfalls einstückig mit dem Grundkörperring 4 verbunden, beispielsweise mittels eines 2-Komponenten-Spritzgußverfahrens.

Auch bei diesem Ausführungsbeispiel können am Umfang die bereits erwähnten Ansätze 11 vorgesehen sein.

### Bezugszeichenliste

- 1: Rohr
- 2: Dichtmittel/Dichtlippe
- 3: Elastischer, ringartiger Bereich
- 4: Grundkörperring
- 5: Grundkörperring
- 6: Grundkörper
- 7: Rohr
- 8: Sicke
- 9: Dichtring
- 10: Fase
- 11: Ansatz
- 12: Axialrippe

## Patentansprüche

1. Rohrmuffe mit einem passend auf ein Rohr (1) aufbringbaren, mit nach innen weisenden Dichtmitteln (2) versehenen Grundkörper, wobei der Grundkörper einen ringartigen, elastischen Bereich (3) umfasst, welcher mit den Dichtmitteln (2) versehen ist, wobei der elastische, ringartige Bereich (3) einstückig mit dem Grundkörper ausgebildet ist, **dadurch gekennzeichnet, daß** der elastische, ringartige Bereich (3) nach außen weisend nicht mittels eines starren, nicht-elastischen Bauteils abgestützt ist.

2. Rohrmuffe nach Anspruch 1, **dadurch gekennzeichnet, dass** der elastische, ringartige Bereich radial nach außen verformbar ist.

3. Rohrmuffe nach einem der Ansprüche 1 bis 2, **dadurch gekennzeichnet, dass** die Dichtmittel (2) einstückig mit dem elastischen, ringartigen Bereich (3) versehen sind.

4. Rohrmuffe nach einem der Ansprüche 1 bis 3, **dadurch gekennzeichnet, dass** der elastische, ringartige Bereich (3) an zumindest einem seiner gegenüberliegenden stirnseitigen Endbereiche mit einem im Wesentlichen nicht-elastischen Grundkörperring (4, 5) verbunden ist.

5. Rohrmuffe nach Anspruch 4, **dadurch gekennzeichnet, dass** der elastische, ringartige Bereich (3) und die Grundkörperringe (4, 5) im Wesentlichen fluchtend zueinander angeordnet sind.

6. Rohrmuffe nach einem der Ansprüche 1 bis 5, **dadurch gekennzeichnet, dass** die Dichtmittel (2) zumindest eine Dichtlippe umfassen.

7. Rohrmuffe nach einem der Ansprüche 1 bis 6, **dadurch gekennzeichnet, dass** der elastische, ringartige Bereich (3) mit den Grundkörperringen (4, 5) einstückig hergestellt ist.

8. Rohrmuffe nach einem der Ansprüche 1 bis 6, **dadurch gekennzeichnet, dass** der elastische, ringartige Bereich (3) mit den Grundkörperringen (4, 5) mittels eines Fügeverfahrens verbunden ist.

9. Rohrmuffe nach einem der Ansprüche 1 bis 8, **dadurch gekennzeichnet, dass** zumindest ein Grundkörperring (4, 5) an seiner Innenseite mit einer Weichkomponente versehen ist.

10. Rohrmuffe nach einem der Ansprüche 1 bis 9, **dadurch gekennzeichnet, dass** der Grundkörper alternierend mehrere elastische, ringartige Bereiche (3) und mehrere Grundkörperringe (4, 5) umfasst.

11. Rohrmuffe nach einem der Ansprüche 1 bis 10, **dadurch gekennzeichnet, dass** der Kontaktbereich zwischen dem elastischen, ringartigen Bereich (3) und dem Grundkörper eben ausgebildet ist.

12. Rohrmuffe nach einem der Ansprüche 1 bis 10, **dadurch gekennzeichnet, dass** der Kontaktbereich zwischen dem elastischen, ringartigen Bereich (3) und dem Grundkörper schräg ausgebildet ist.

13. Rohrmuffe nach einem der Ansprüche 1 bis 10, **dadurch gekennzeichnet, dass** der Kontaktbereich zwischen dem elastischen, ringartigen Bereich (3) und dem Grundkörper abgestuft ausgebildet ist.

14. Rohrmuffe nach einem der Ansprüche 1 bis 13, **dadurch gekennzeichnet, dass** der elastische, ringartige Bereich (3) sich in axialer Richtung zumindest zum Teil in den Grundkörperring (4, 5) erstreckt.

15. Rohrmuffe nach Anspruch 14, **dadurch gekennzeichnet, dass** der elastische, ringartige Bereich formschlüssig mit dem Grundkörperring (4, 5) verbunden ist.

16. Rohrmuffe nach Anspruch 14 oder 15, **dadurch gekennzeichnet, dass** der elastische, ringartige Bereich (3) an dem in dem Grundkörperring (4, 5) angeordneten Bereich nach innen weisend profiliert ist.

17. Rohrmuffe nach einem der Ansprüche 1 bis 16, **dadurch gekennzeichnet, dass** der elastische, ringartige Bereich (3) aus einem transparenten oder transluzenten Material gefertigt ist.

18. Rohrmuffe nach einem der Ansprüche 1 bis 17, **dadurch gekennzeichnet, dass** die Rohrmuffe mittels eines 2-Komponenten-Spritzverfahrens aus Kunststoffen gefertigt ist.

## Claims

1. Connecting sleeve having a base body that can be fitted snugly to a pipe (1) and has sealing means (2) that face inwards, the base body comprising an annular, elastic region (3) which is provided with the sealing means (2), the elastic annular region (3) being formed in one piece with the base body, **characterized in that** the elastic annular region (3) pointing outwards is not supported by means of a rigid, non-elastic component.

2. Connecting sleeve according to Claim 1, **characterized in that** the elastic annular region can be deformed radially outwards.

3. Connecting sleeve according to one of Claims 1 to 2, **characterized in that** the sealing means (2) are provided in one piece with the elastic annular region (3).

4. Connecting sleeve according to one of Claims 1 to 3, **characterized in that**, in at least one of its opposite end regions, the elastic annular region (3) is connected to a substantially non-elastic base body ring (4, 5).

5. Connecting sleeve according to Claim 4, **characterized in that** the elastic annular region (3) and the base body rings (4, 5) are arranged so as to be substantially aligned with one another.

6. Connecting sleeve according to one of Claims 1 to 5, **characterized in that** the sealing means (2) comprise at least one sealing lip.

7. Connecting sleeve according to one of Claims 1 to 6, **characterized in that** the elastic annular region (3) is produced in one piece with the base body rings (4, 5).

8. Connecting sleeve according to one of Claims 1 to 6, **characterized in that** the elastic annular region (3) is connected to the base body rings (4, 5) by means of a joining process.

9. Connecting sleeve according to one of Claims 1 to 8, **characterized in that** at least one base body ring (4, 5) is provided with a soft component on its inner side.

10. Connecting sleeve according to one of Claims 1 to 9, **characterized in that** the base body comprises a plurality of elastic annular regions (3) and a plurality of base body rings (4, 5) alternating with one another.

11. Connecting sleeve according to one of Claims 1 to 10, **characterized in that** the contact region between the elastic annular region (3) and the base body is flat.

12. Connecting sleeve according to one of Claims 1 to 10, **characterized in that** the contact region between the elastic annular region (3) and the base body is inclined.

13. Connecting sleeve according to one of Claims 1 to 10, **characterized in that** the contact region between the elastic annular region (3) and the base body is stepped.

14. Connecting sleeve according to one of Claims 1 to 13, **characterized in that** the elastic annular region (3) extends in the axial direction at least partly into the base body ring (4, 5).

15. Connecting sleeve according to Claim 14, **characterized in that** the elastic annular region is connected to the base body ring (4, 5) by a form fit.

16. Connecting sleeve according to Claim 14 or 15, **characterized in that** the elastic annular region (3) in the region arranged in the base body ring (4, 5) is profiled, pointing inwards.

17. Connecting sleeve according to one of Claims 1 to 16, **characterized in that** the elastic annular region (3) is fabricated from a transparent or translucent material.

18. Connecting sleeve according to one of Claims 1 to 17, **characterized in that** the connecting sleeve is fabricated from plastics by means of a two-component injection moulding process.

## Revendications

1. Manchon de tube avec un corps de base pouvant être posé de manière ajustée sur un tube (1), muni de moyens d'étanchéité (2) orientés vers l'intérieur, dans lequel le corps de base comporte une zone élastique annulaire (3) qui est munie des moyens d'étanchéité (2), dans lequel la zone élastique annulaire (3) est réalisée d'un seul tenant avec le corps de base, **caractérisé en ce que** la zone élastique annulaire (3) orientée vers l'extérieur n'est pas supportée à l'aide d'un élément rigide non élastique.

2. Manchon de tube selon la revendication 1, **caractérisé en ce que** la zone élastique annulaire est déformable radialement vers l'extérieur.

3. Manchon de tube selon l'une des revendications 1 à 2, **caractérisé en ce que** les moyens d'étanchéité (2) sont garnis d'un seul tenant avec la zone élastique annulaire.

4. Manchon de tube selon l'une des revendications 1 à 3, **caractérisé en ce que** la zone élastique annulaire (3) est reliée à une bague de corps de base (4, 5) sensiblement non élastique dans au moins l'une de ses zones d'extrémités opposées du côté frontal.

5. Manchon de tube selon la revendication 4, **caractérisé en ce que** la zone élastique annulaire (3) et la bague de corps de base (4, 5) sont disposées sensiblement en alignement l'une sur l'autre.

6. Manchon de tube selon l'une des revendications 1 à 5, **caractérisé en ce que** les moyens d'étanchéité (2) comportent au moins une lèvre d'étanchéité.

7. Manchon de tube selon l'une des revendications 1 à 6, **caractérisé en ce que** la zone élastique annulaire (3) est réalisée d'un seul tenant avec les bagues de corps de base (4, 5).

8. Manchon de tube selon l'une des revendications 1 à 6, **caractérisé en ce que** la zone élastique annulaire (3) est reliée aux bagues de corps de base (4, 5) à l'aide d'un procédé d'assemblage.

9. Manchon de tube selon l'une des revendications 1 à 8, **caractérisé en ce qu'**au moins une bague de corps de base (4, 5) est munie d'un composant mou sur son côté intérieur.

10. Manchon de tube selon l'une des revendications 1 à 9, **caractérisé en ce que** le corps de base comprend en alternance plusieurs zones élastiques annulaires (3) et plusieurs bagues de corps de base (4, 5).

11. Manchon de tube selon l'une des revendications 1 à 10, **caractérisé en ce que** la zone de contact entre la zone élastique annulaire (3) et le corps de base est plane.

12. Manchon de tube selon l'une des revendications 1 à 10, **caractérisé en ce que** la zone de contact entre la zone élastique annulaire (3) et le corps de base est inclinée.

13. Manchon de tube selon l'une des revendications 1 à 10, **caractérisé en ce que** la zone de contact entre la zone élastique annulaire (3) et le corps de base est étagée.

14. Manchon de tube selon l'une des revendications 1 à 13, **caractérisé en ce que** la zone élastique annulaire (3) s'étend dans la direction axiale au moins en partie dans la bague de corps de base (4, 5).

15. Manchon de tube selon la revendication 14, **caractérisé en ce que** la zone élastique annulaire est reliée par fermeture géométrique avec la bague de corps de base (4, 5).

16. Manchon de tube selon la revendication 14 ou 15, **caractérisé en ce que** la zone élastique annulaire (3) est profilée pour être orientée vers l'intérieur dans la zone disposée dans la bague de corps de base (4, 5).

17. Manchon de tube selon l'une des revendications 1 à 16, **caractérisé en ce que** la zone élastique annulaire (3) est faite en une matière transparente ou translucide.

18. Manchon de tube selon l'une des revendications 1 à 17, **caractérisé en ce que** le manchon de tube est fabriqué en matières plastiques à l'aide d'un procédé d'injection à deux composants.
